# EUROPÄISCHE PATENTSCHRIFT

(11) **EP 2 558 758 B1**
(45) Veröffentlichungstag und Bekanntmachung des Hinweises auf die Patenterteilung: **18.05.2016**
(21) Anmeldenummer: 11715415.3
(22) Anmeldetag: 11.04.2011
(51) Int. Cl.: F16K 31/06, F16K 27/04, F15B 13/06

(54) **STROMREGELVENTIL**
FLOW CONTROL VALVE
RÉGULATEUR DE DÉBIT

(30) Priorität: 10.04.2010 DE 102010014496
(43) Veröffentlichungstag der Anmeldung: 20.02.2013
(73) Patentinhaber: Hydac Fluidtechnik GmbH, 66280 Sulzbach/Saar (DE)
(72) Erfinder: WARD, Christopher, Sycamore, IL 60178 (US); MALONE, Peter, Glenview, IL 60026 (US)
(74) Vertreter: Bartels, Martin Erich Arthur
(86) Internationale Anmeldenummer: PCT/EP2011/001786
(87) Internationale Veröffentlichungsnummer: WO 2011/124394

(56) Entgegenhaltungen:
- EP-A1- 1 439 285
- DE-A1- 10 133 990
- DE-A1-102008 013 271
- FR-A1- 2 805 492
- US-A- 2 675 831

## Beschreibung

Die Erfindung betrifft ein Stromregelventil mit den Merkmalen im Oberbegriff von Anspruch 1.

Stromregelventile, insbesondere in Form von elektromagnetischen Wege-Stromregelventilen, haben die Funktion, den Volumenstrom unabhängig von der Druckdifferenz und der Viskosität eines Fluids auf einen konstanten Wert zu regeln. In Abhängigkeit von der Ausführung des jeweiligen Stromregelventils kann auf der Vor- oder Rücklaufseite eines angeschlossenen hydraulischen Verbrauchers geregelt werden. Mit Hilfe von Proportional-Magneten als Aktuatoren können Stromregelventile mit einstellbarem Volumenstrom verwirklicht werden, wobei ein Proportional-Magnet eine Parallelverschiebung der Kennlinie des betreffenden Ventils veranlassen kann.

Die Volumenstrom-Einstellung erfolgt dabei stufenlos durch den Proportional-Magneten, der durch einen elektronischen Stromverstärker angesteuert wird. Die Proportionalventile können lagegeregelt oder kraftgeregelt sein. In der Regel wirkt ein als Schieberkolben ausgebildeter Steuerkolben unter der Wirkung der Magnetkraft des Proportional-Magneten gegen eine Druckfeder, wobei sich ein Blendenquerschnitt entsprechend vergrößert oder verkleinert. Die Druckunabhängigkeit des Volumenstromes wird durch ein Differenzdruckventil (Druckwaage) erreicht. Es sorgt für eine konstante Druckdifferenz an der Messblende und ist dieser regelmäßig nachgeschaltet.

Ein Wegeventil mit der vorstehend genannten Funktion ist aus der DE 196 04 317 A1 bekannt. Dieses Ventil weist einen hohlkegelförmigen Ventilsitz auf, der mit einem Ventilelement einen Ventilöffnungsbereich ausbildet. Das Ventilelement weist dabei einen Kugelsegmentabschnitt auf. Der Radius des Kugelsegmentabschnittes und der Öffnungswinkel des hohlkegelförmigen Ventilsitzes sind derart festgelegt, dass ein Dichtungsbereich gebildet ist, wenn das Ventilelement auf dem Ventilsitz aufsitzt. Das Ventilelement wird in einem Ventilkörper bewegbar geführt, wobei der Ventilkörper eine entsprechende Innenumfangsfläche aufweist, die über die gesamte Länge des Ventilelements einen im Wesentlichen gleichmäßigen Durchmesser aufweist.

Insbesondere solche in Sitzbauweise ausgeführten Stromregelventile weisen zumindest zwei Problembereiche auf. Zum einen ist der Strombedarf für den Proportional-Magneten relativ groß und zum anderen lassen sie sich in Grenzöffnungsbereichen nur schwer exakt ansteuern. So weist das in der Druckschrift offenbarte elektromagnetische Wegeventil eine flache Kennlinie auf, so dass die Solenoid-Antriebskraft fast über den gesamten Bereich des Ventilhubes in Beziehung auf einen identischen Antriebsstrom vergleichmäßigt wird. Dies wird dadurch bewirkt, dass die Solenoid-Antriebskraft derart gesetzt wird, dass sie eine flache Kennlinie aufweist, um die Steuerung des Ventilöffnungsgrades einfacher zu gestalten; allein dies hat den Nachteil, dass die Solenoid-Antriebskraft relativ groß in Bezug auf eine Änderung in einem Bereich wird, in dem der Stromwert entsprechend groß ist. Dies resultiert aus dem Zusammenhang, dass die Solenoid-Antriebskraft proportional zum Quadrat des Stromwertes ist. Die Änderungsgröße der Solenoid-Antriebskraft wird deshalb in Bezug auf dieselbe Änderungsgröße in dem Strom größer.

Die zu steuernde Flussrate eines Fluids neigt deshalb bei solchen Ventilen zu einer abrupten Änderung in Bezug auf eine kleine Änderung des Antriebsstroms in einem Bereich, in dem der Öffnungsgrad des elektromagnetischen Proportional-Stromregelventils klein ist. Solche Stromregelventile in Sitzbauart haben demnach das Problem, dass eine genaue Flussraten-Steuerung in einem Bereich, mit niedriger Flussrate, bei der die zu steuernde Flussrate gering ist, nur schwierig zu erreichen ist.

Die bekannten Stromregelventile in Schieberbauart hingegen weisen allgemein einen nicht minimierten Strombedarf bzw. eine nicht minimierte Baugröße des Proportional-Magneten auf.

Die EP 1 439 285 A1 offenbart ein elektromagnetisches Proportionalventil mit Bypass einer Nockenwellenverstelleinrichtung einer Brennkraftmaschine. Durch einen Hohlkolben kann eine Verbindung von einem Pumpenanschluss zu einem von zwei Nutzanschlüssen durch den Hohlkolben hergestellt werden. Der Hohlkolben weist Radialbohrungen auf, die eine Druckentlastung des Hohlkolbens ermöglichen.

Durch die FR 2 805 492 gehört ein Steuerungssystem für eine Fahrzeugaufhängung zum Stand der Technik. Dieses System umfasst ein Ventil, das einen hülsenförmigen Ventilkörper aufweist. Der Ventilkörper wird durch einen von einem Aktuator über einen Stößel und eine mit Bohrungen versehene Übertragungsscheibe bewegt.

Die DE 101 33 990 A1 beschreibt ein Wegeventil in Schieberbauart, mit einem in einer Ventilbohrung eines Gehäuses geführten Ventilkörper, über den eine Verbindung zwischen einem stirnseitigen Anschluss und zumindest einem Radialanschluss auf- und zusteuerbar sind, wobei der an einem Anschluss wirksame Druck über eine Verbindungsbohrung zur Ventilkörperrückseite geführt ist.

Ausgehend von diesem Stand der Technik liegt der Erfindung die Aufgabe zugrunde, ein Stromregelventil zu schaffen, das eine geringe Baugröße bei exakter Volumenstromsteuerung über den gesamten vorgesehenen Betriebsbereich ermöglicht und dessen Energiebedarf minimiert ist.

Die dahingehende Aufgabe wird von einem Stromregelventil mit den Merkmalen des Patentanspruches 1 in seiner Gesamtheit gelöst.

Eine genaue Regel- und Ansteuerkennlinie für das Stromregelventil ergibt sich dadurch, dass der Steuerkolben von dem Druckmeldekolben derart durchgriffen ist, dass der Druckmeldekolben im Bereich seiner freien Stirnseite mit einer Durchlassöffnung des Steuerkolbens eine Messblende begrenzt, die in Richtung der Fluideingangsseite des Stromregelventils weist.

Weiterhin ist vorgesehen, dass für das Einwirken des Ankers auf den Steuerkolben der Druckmeldekolben dient, dass mittels des Druckmeldekanals der Fluideingang fluidführend mit der Druckmeldekammer derart verbunden ist, dass der in der Druckmeldekammer anstehende Fluiddruck den Druckmeldekolben sowie den Steuerkolben im Sinne einer Entlastung des Proportional-Magneten mit einer Kraft beaufschlagt, und dass die weitere fluidführende Verbindung zwischen dem Fluideingang und einer weiteren Abströmöffnung angesteuert ist. Damit ist insgesamt ein elektromagnetisch betätigbares Stromregelventil geschaffen, das in der Art eines 3-Wege-Proportional-Stromregelventils geeignet ist, die Volumenstromsteuerung für zumindest zwei hydraulische Verbraucher vorzunehmen.

Der Druckmeldekolben des Stromregelventils ist mit dem Steuerkolben lose verbunden und auf den Druckmeldekolben wirken dadurch Kräfte im Sinne einer Entlastung des Proportional-Magneten ein. Zudem werden die notwendigen Betätigungskräfte für den Steuerkolben dadurch verringert, dass seine Projektionsfläche in Fluidströmungsrichtung, anders als bei bekannten Ventilen mit Sitzbauweise, durch die Querschnittsfläche des insoweit in den Steuerkolben hineinragenden Druckmeldekolbens geschmälert wird. Das erfindungsgemäße Stromregelventil weist somit drei konstruktive Maßnahmen auf kleinstem Raum auf, zum einen die notwendigen Betätigungskräfte und damit den Energieverbrauch für sein Ventilelement in Form des Steuerkolbens zu reduzieren, nämlich durch die Wirkungsumkehr der Fluidströmung auf den Druckmeldekolben durch die druckmeldekolbenrückseitige Fluidbeaufschlagung in der Druckmeldekammer und der damit einhergehenden Verringerung der angeströmten bzw. druckbeaufschlagten Projektionsfläche oder Stirnfläche des Steuerkolbens selbst. Zum anderen weist das erfindungsgemäße Stromregelventil eine weitere fluidführende Verbindung zwischen dessen Fluideingang und einer weiteren Abströmöffnung auf, so dass hiermit die Volumenstromsteuerung für zwei hydraulische Verbraucher ermöglicht ist.

Mit dem erfindungsgemäßen Stromregelventil ist ein elektromagnetisch betätigbares Stromregelventil geschaffen, das ausgesprochen flache Kennlinienverläufe aufweist, so dass die Solenoid-Antriebskraft des Stromregelventils über den gesamten Bereich des Ventilhubes in Beziehung auf einen identischen Antriebsstrom vergleichmäßigt wird, wobei nahezu 100 % gerade Kennlinienverläufe erreichbar sind.

Vorteilhaft sind die Abströmöffnungen in dem Ventilgehäuse so angeordnet, dass bei einer Vergrößerung des freien Durchflussquerschnittes der einen Abströmöffnung durch eine Bewegung des Steuerkolbens der freie Durchflussquerschnitt der jeweils anderen Abströmöffnung mittels des Steuerkolbens verkleinert wird. Vorzugsweise ist so das Stromregelventil im Sinne einer Ausgestaltung als eine Art Prioritätsventil gebildet, wobei die eine Abströmöffnung einen Medienanschluss zur Versorgung eines anschließbaren Verbrauchers höherer Priorität mit einem strömungsfähigen Medium bildet und demgegenüber die andere Abströmöffnung einen weiteren Medienanschluss zur Versorgung eines Verbrauchers mit niedrigerer Priorität bildet. Es ergibt sich durch die konstruktiven Maßnahmen ein Stromregelventil in der Art eines Prioritätsventils mit kleinstem Energiebedarf und minimiertem Bauraumbedarf.

In einem besonders bevorzugten Ausführungsbeispiel ist das Stromregelventil mit einem Steuerkolben versehen, mit mindestens zwei Reihen von axial voneinander beabstandeten Durchtrittsöffnungen, wobei eine der Reihen der einen Abströmöffnung und eine jeweils andere Reihe der anderen Abströmöffnung zugeordnet ist. Dadurch ergeben sich insgesamt symmetrische Strömungsverläufe innerhalb des Stromregelventils, insbesondere innerhalb dessen Steuerkolben.

Die Durchtrittsöffnungen und die Abströmöffnungen sind vorzugsweise aus mehreren einander zuordenbaren Bohrungsreihen gebildet, die zur Längs- oder Betätigungsachse des Ventils axial beabstandet sind. Die Bohrungen liegen in der jeweiligen Reihe diametral einander gegenüber. Dadurch ergeben sich insgesamt Symmetrien in dem Stromregelventil bezogen auf dessen Längsachse, wodurch die Fertigung des Stromregelventils vereinfacht ist und harmonische Stromführungen und Stromübergänge sind innerhalb des Ventilkörpers erreicht.

Die vom Fluiddruck wirksam beaufschlagten Steuerflächen des Steuerkolbens und die des Druckmeldekolbens ergeben voneinander abgezogen eine vom Fluiddruck beaufschlagte Reststeuerfläche mit einer Krafteinleitung auf die beiden Kolben dergestalt, dass die Entlastung für den Proportional-Magneten hergestellt ist. Ohne den Druckmeldekolben mit seiner druckwirksamen Meldekolben-Rückseite würde der gesamte Fluiddruck auf der Fluideingangsseite des Ventils auf der insoweit zugewandten Stirnseite des Ventilelements oder Steuerkolbens anstehen mit der Folge, dass der Proportional-Magnet sehr große Betätigungskräfte für das Ventilelement, respektive den Steuerkolben aufzubringen hätte. Dies würde wiederum konstruktiv groß aufbauende Proportional-Magnete innerhalb der Ventilvorrichtung voraussetzen, die auch einen entsprechend hohen Energiebedarf hätten. Durch den Einsatz des Druckmeldekolbens werden, wie dargelegt, die notwendigen Betätigungskräfte reduziert, so dass klein aufbauende Proportional-Magnete für die Ansteueraufgaben mit entsprechend geringem Leistungsbedarf genügen. Im Übrigen begünstigt auch der Druckmeldekolben den modularen Aufbau des Stromregelventils, da in normierter Größenabstufung Ventilbauelemente einschließlich des Proportional-Magneten eingesetzt werden können, um verschiedenste Leistungsklassen an zu beherrschenden Fluid- oder Medienströmen abdecken zu können. Es ist für einen Durchschnittsfachmann auf dem Gebiet der Ventiltechnik überraschend, dass er durch den Einsatz eines Druckmeldekolbens sowie einer Fluidführung auf seiner dem Proportional-Magneten zugewandten Seite erstmalig dessen Betätigungskraft deutlich reduzieren kann.

Bei einer bevorzugten Ausführungsform des erfindungsgemäßen Stromregelventils ist vorgesehen, dass der jeweilige Druckmeldekanal eine permanent fluidführende Verbindung zwischen dem Fluideingang und der Druckmeldekammer herstellt. Hierbei ist vorzugsweise bei einer Ausführungsform vorgesehen, dass der Druckmeldekanal den Druckmeldekolben zumindest teilweise, vorzugsweise vollständig in axialer Richtung durchgreift und bei einer anderen Ausführungsform kann vorgesehen sein, dass hierfür der Druckmeldekanal seitlich in dem Ventilgehäuse angeordnet an dem Steuerkolben vorbeigeführt ist. In Einzelfällen ist denkbar, die dahingehenden Druckmeldekanäle auch gemeinsam mit einer Ventilkonstruktion einzusetzen.

Bei einer besonders bevorzugten Ausführungsform des erfindungsgemäßen Stromregelventils ist die Messblende durch Innenwandteile des Steuerkolbens gebildet, die in jeder Verfahrstellung des Steuerkolbens sich zwischen den beiden Abströmöffnungen befinden. Der Druckmeldekanal des Druckmeldekolbens durchgreift dabei die Messblende unter Bildung eines radialen Abstandes. In Axialrichtung des erfindungsgemäßen Stromregelventils betrachtet, mündet das freie stirnseitige Ende des Druckmeldekanals in jeder Verfahrstellung des Steuerkolbens in die weitere fluidführende Verbindung zwischen Fluideingang und weiterer Abströmöffnung aus.

Bei einer weiteren besonders bevorzugten Ausführungsform des erfindungsgemäßen Stromregelventils wirkt der mittels des Proportional-Magneten axial verschiebbare Anker nicht direkt auf den Steuerkolben ein, sondern der den Steuerkolben axial teilweise oder ganz durchgreifende Druckmeldekolben dient als eine Art Zwischenglied zwischen dem Anker und dem Steuerkolben. Er wird von dem Anker zumindest mittelbar betätigt und in Abhängigkeit von dem gemessenen Pumpendruck an dem Fluideingang des Steuerkolbens und damit dem Öffnungsquerschnitt der fluidführenden Verbindung eingestellt. Auch in dahingehenden Fällen stellt sich eine Bauraum- und Energieminimierung für das jeweils eingesetzte Aktuatorsystem ein.

Der Druckmeldekolben kann über eine Mitnahmescheibe mit dem Steuerkolben lose verbunden sein, und zwar dahingehend, dass die Mitnahmescheibe den Steuerkolben in Wirkrichtung des bestromten Proportional-Magneten oder einer Rückstelleinrichtung für den Steuerkolben mitnimmt, dass aber jedenfalls in entgegengesetzter Verfahrrichtung des Ankers des Proportional-Magneten und des Druckmeldekolbens eine Relativbewegung beider genannter Kolben zueinander möglich ist.

Vorteilhaft ist der Proportional-Magnet in der Art eines "drückenden Magneten" ausgebildet und in seinem unbestromten Zustand der Steuerkolben durch eine Rückstelleinrichtung in eine Position gebracht, in der die eine fluidführende Verbindung gesperrt und die weitere andere fluidführende Verbindung zumindest teilweise geöffnet ist. In einer weiteren bevorzugten Ausführungsform ist der Proportional-Magnet in der Art eines "ziehenden Magneten" ausgebildet und in seinem unbestromten Zustand ist der Steuerkolben durch eine Rückstelleinrichtung in eine Position gebracht, in der die eine fluidführende Verbindung zumindest teilweise geöffnet ist und die weitere andere fluidführende Verbindung gesperrt ist. Das erfindungsgemäße Stromregelventil in der Art eines Prioritätsventils ist somit allein durch die Modifikation des Proportional-Magneten als "drückender Magnet" oder als "ziehender Magnet" mit zwei unterschiedlichen Arten an Schaltpositionen in unbestromtem Zustand des Proportional-Magneten herstellbar.

In einem bevorzugten Ausführungsbeispiel weist der Druckmeldekolben eine größte Stirnfläche auf, die vorzugsweise etwa einem Viertel der durch den Steuerkolben beschriebenen Stirnfläche entspricht.

Der Druckmeldekolben erweitert sich im Durchmesser vorzugsweise von seiner dem Fluideingang des Stromregelventils zugewandten Seite zu der dem Anker zugewandten Seite. Der Steuerkolben ist, wie bereits erwähnt, in der Art eines Schieberkolbens ausgebildet, wobei eine Messblendenöffnung, die dem Fluideingang des Stromregelventils zugewandt ist, vorzugsweise einen etwa doppelt so großen Innendurchmesser aufweist wie der Durchmesser des Druckmeldekolbens in diesem Bereich.

Im Folgenden wird das erfindungsgemäße Stromregelventil anhand von zwei grundsätzlichen Ausführungsbeispielen nach der Zeichnung näher erläutert. Dabei zeigen in prinzipieller und nicht maßstäblicher Art die
- Fig. 1: teilweise im Längsschnitt und teilweise in Ansicht ein erstes Ausführungsbeispiel eines Stromregelventils; und
- Fig. 2: eine zu der Fig. 1 vergleichbare Darstellung eines weiteren Ausführungsbeispiels eines Stromregelventils.

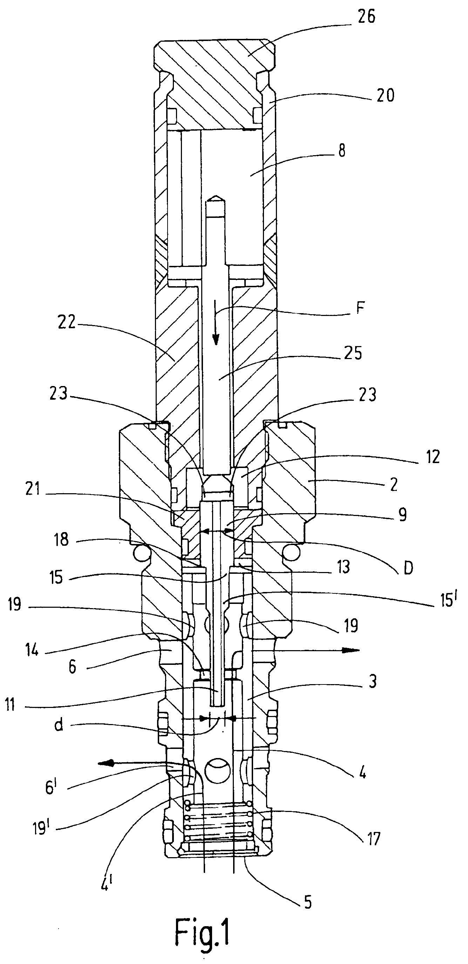

In der Fig. 1 sind wesentliche Komponenten eines elektromagnetisch betätigbaren 3-Wege-Proportional-Stromregelventils 1 gezeigt, das in der Lage ist, einen Druckmittel-Volumenstrom von einer nicht dargestellten Druckmittelpumpe oder sonstigen Druckversorgung zu zumindest einem von zwei nicht dargestellten, hydraulisch angeschlossenen Verbrauchern unabhängig von etwa auftretenden Druckschwankungen im Wesentlichen konstant zu halten. Das elektromagnetische 3-Wege-Stromregelventil 1 kann auf der Vorlaufseite oder auf der Rücklaufseite der nicht gezeigten hydraulischen Verbraucher, beispielsweise in Form von Arbeitszylindern einer Baumaschine od. dgl., den Volumenstrom regeln.

Das im Folgenden nur noch verkürzt als Stromregelventil 1 bezeichnete Ventil weist ein Ventilgehäuse 2 auf, das in der Art einer Einschraub-Patronenlösung ausgebildet ist. An seinem unteren, axialen Ende weist das Ventilgehäuse 2 einen zentralen Fluideingang 5 auf und mehrere, radiale Abströmöffnungen 6, 6', von denen paarweise jeweils als Bohrungen zwei in der Längsschnittdarstellung gezeigt sind. Ein in der Art eines Schieberkolbens ausgebildeter, hülsenförmiger Steuerkolben 3 ist als Ventilelement verschiebbar in einer Bohrung in dem Ventilgehäuse 2 geführt. Der Steuerkolben 3 wird von einer zylindrischen oder konischen als Druckfeder gebildeten Rückstelleinrichtung 17 in Richtung auf einen an dem anderen Ende des Ventilgehäuses 2 nicht näher dargestellten Proportional-Magneten gehalten. Ein als Anker 8 gebildetes Aktuatorteil wirkt auf den Steuerkolben 3 an seinem, dem Proportional-Magneten zugewandten Ende.

Für das Einwirken des Ankers 8 auf den Steuerkolben 3 dient ein Druckmeldekolben 9. Der Druckmeldekolben 9 verbindet mittels eines Druckmeldekanals 11 den Fluideingang 5 mit einer Druckmeldekammer 12. Der dadurch in der Druckmeldekammer 12 anstehende Fluiddruck beaufschlagt den Druckmeldekolben 9 sowie den Steuerkolben 3 im Sinne einer Entlastung des Proportional-Magneten mit einer Kraft F. In dem Stromregelventil 1 sind fluidführende Verbindungen 4, 4' zwischen dem Fluideingang 5 und den Abströmöffnungen 6, 6' vorhanden. Bei einer Vergrößerung des freien Durchflussquerschnitts der Abströmöffnung 6' in Regelstellungen des Steuerkolbens 3, bei denen beide Abströmöffnungen 6, 6' durchströmt sind, verkleinert sich der freie Durchflussquerschnitt der Abströmöffnung 6.

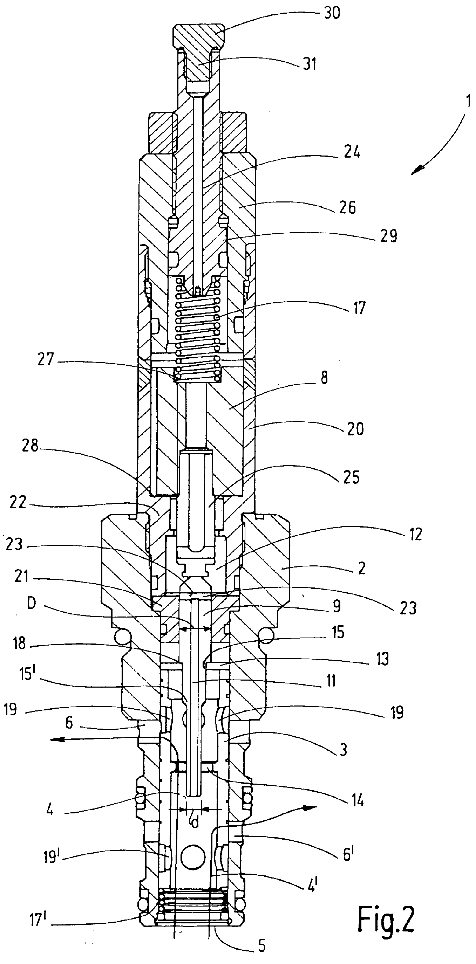

Das in der Fig. 1 und auch in der Fig. 2 gezeigte Ausführungsbeispiel des Stromregelventils 1 ist in der Art eines Prioritätsventils ausgestaltet, wobei eine Abströmöffnung 6 oder 6' einen Medienanschluss zur Versorgung eines anschließbaren Verbrauchers höherer Priorität mit dem Fluid bildet und die andere Abströmöffnung 6' bzw. 6 demgegenüber einen weiteren Medienanschluss zur Versorgung eines Verbrauchers mit niedrigerer Priorität bilden kann. Es ist aber auch eine andere Anschlussbelegung mit wiederum geänderter Priorität möglich. In den in den Fig. 1 und 2 gezeigten Ausführungsbeispielen wird die jeweilige Abströmöffnung 6, 6' jeweils durch eine Reihe an Bohrungen entlang des Umfanges des Ventilgehäuses 2 gebildet. Der Steuerkolben 3 weist wiederum mindestens zwei Reihen von axial beabstandeten Durchtrittsöffnungen 19, 19' auf, wobei die eine Reihe der einen Abströmöffnung 6 und die jeweils andere Reihe der anderen Abströmöffnung 6' jeweils einer Reihe an Durchtrittsöffnungen 19, 19' zugeordnet ist.

Dadurch ergibt sich die fluidführende Verbindung 4 zwischen dem Fluideingang 5 und der Reihe von Bohrungen betreffend die Abströmöffnung 6 und die fluidführende Verbindung 4' zwischen dem Fluideingang 5 und der Reihe der Bohrungen betreffen die anderen Abströmöffnung 6'. Die Durchtrittsöffnungen 19, 19' und die Abströmöffnungen 6, 6' sind in den Ausführungsbeispielen in den Fig. 1 und 2 besonders bevorzugt aus mehreren einander zuordenbaren Bohrungsreihen gebildet, die zur Längs- oder Betätigungsachse des Ventils 1 axial beabstandet und in Reihen aufgeteilt sind. Je nach Verfahrstellung des Steuerkolbens 3 erlauben die Durchtrittsöffnungen 19, 19' den Durchfluss von strömungsfähigem Medium oder Fluid in der jeweiligen fluidführenden Verbindung 4, 4' oder sperren die jeweilige fluidführende Verbindung 4, 4' teilweise oder ganz. In den bereits erwähnten Regelstellungen des Steuerkolbens 3 ist aufgrund der gewählten Abstände zwischen den Abströmöffnungen 6, 6' und den Durchtrittsöffnungen 19, 19' ein Fluss von strömungsfähigem Medium in beide fluidführende Verbindungen 4, 4' in vorgebbaren Mengen ermöglicht.

Die vom Fluiddruck wirksam beaufschlagten Steuerflächen des Steuerkolbens 3 und die des Druckmeldekolbens 9 ergeben voneinander abgezogen eine vom Fluiddruck beaufschlagte Reststeuerfläche mit einer Krafteinleitung auf die beiden Kolben 3, 9, die die Entlastung für den Proportional-Magneten bewirkt. Durch diese Kraftentlastung kann ein konstruktiv kleiner aufbauender Proportional-Magnet zum Einsatz kommen, als dies bei bekannten Lösungen der Fall ist, die auf den erfindungsgemäßen Druckmeldekolben 9 verzichten. Auch ist die dahingehende Entlastung energiesparend, da die Leistungsaufnahme für den Proportional-Magneten geringer ausfällt. Insoweit verringert also der größte Querschnitt des Druckmeldekolbens 9 die Projektionsfläche des Steuerkolbens 3 und die hieraus resultierende verbleibende Reststeuerfläche führt zu der den Proportional-Magneten entlastenden Krafteinleitung.

Der Druckmeldekanal 11 stellt eine permanent fluidführende Verbindung zwischen dem Fluideingang 5 und der Druckmeldekammer 12 her. Dabei durchgreift der Druckmeldekanal 11 den Druckmeldekolben 9 axial. Es kann auch vorteilhaft sein, den Druckmeldekanal 11 seitlich in dem Ventilgehäuse 2 anzuordnen und an dem Steuerkolben 3 vorbeizuführen (nicht dargestellt). Der Steuerkolben 3 ist von dem Druckmeldekolben 9, wie gezeigt, teilweise axial durchgriffen, wobei der Druckmeldekolben 9 im Bereich seiner freien Stirnseite mit einer Durchlassöffnung des Steuerkolbens 3 eine Messblende 14 begrenzt. Die Messblende 14 wird durch Innenwandteile des Steuerkolbens 3 gebildet, wobei die Messblende 14 in jeder Verfahrstellung des Steuerkolbens 3 sich zwischen den Abströmöffnungen 6, 6' befindet. Der Druckmeldekanal 11 des Druckmeldekolbens 9 durchgreift hierbei unter Bildung eines radialen Abstandes die Messblende 14. Das freie stirnseitige Ende des Druckmeldekanals 11 mündet, in axialer Richtung des Stromregelventils 1 betrachtet, in jeder Verfahrstellung des Steuerkolbens 3 in die weitere fluidführende Verbindung 4' zwischen dem Fluideingang 5 und der weiteren Abströmöffnung 6' aus. Der mittels des Proportional-Magneten axial verschiebbare Anker 8 wirkt über den Druckmeldekolben 9 als Zwischenglied permanent auf den Steuerkolben 3 ein. Der Druckmeldekolben 9 ist zur Krafteinleitung auf den Steuerkolben 3 über eine Mitnahmescheibe 13 mit dem Steuerkolben 3 lose verbunden. Die Mitnahmescheibe 13 ist mit einer Öffnung 18 versehen.

In Fig. 1 ist das Stromregelventil 1 mit einem Proportional-Magneten in der Art eines "drückenden Magneten" ausgebildet, wobei in dem unbestromten Zustand des Proportional-Magneten der Steuerkolben 3 durch die Rückstelleinrichtung 17 in eine Position gebracht ist, in der die fluidführende Verbindung 4 gesperrt und die weitere fluidführende Verbindung 4' zumindest teilweise geöffnet ist.

Der Steuerkolben 3 öffnet und verschließt mithin die fluidführenden Verbindungen 4, 4' über Kraftbeaufschlagung des von dem Proportional-Magneten in einem Polrohr 20 bewegten Ankers 8, der fachsprachlich auch mit Magnetanker bezeichnet wird. Der Proportional-Magnet wird über eine nicht näher dargestellte Rechnereinheit nebst zugehöriger Sensorik angesteuert. Die dahingehende Ansteuerung ist für Stromregelventile üblich, sodass an dieser Stelle hierauf nicht mehr näher eingegangen wird. Die Druckmeldekammer 12 ist zwischen einem Führungsteil 21 für den Druckmeldekolben 9 und einem Polrohrsockel 22 angeordnet. Der Druckmeldekolben 9 durchragt mit einem verbreiterten Bereich mit einem Durchmesser D den Führungsteil 21, der eine Art feststehendes Axial-Gleitlager für den Druckmeldekolben 9 bildet. Das Führungsteil 21 und der Polrohrsockel 22 sind in dichtender Weise in dem Ventilgehäuse 2 festgelegt. Der Druckmeldekolben 9 durchragt mit sich abstufend verkleinerndem Durchmesser in Betrachtungsrichtung der Fig. 1 nach unten hin den Steuerkolben 3. Der Druckmeldekanal 11 ist zentral, axial mittig, vorzugsweise in Form einer Bohrung gebildet, die in mindestens zwei radial verlaufende Stichbohrungen 23 ausmündet. Der Druckmeldekolben 9 weist einen weiteren Durchmessersprung 15 an der Öffnung 18 der Mitnahmescheibe 13 auf, so dass sich der Durchmesser D, den er in seinem von dem Führungsteil 21 geführten Bereich aufweist, auf den Durchmesser an der Öffnung 18 verringert.

Mit Hilfe dieser Durchmesserverkleinerung ist eine formschlüssige Anlage des Druckmeldekolbens 9 sowie eine Verbindung mit dem Steuerkolben 3 geschaffen. Die Verbindung ist derart realisiert, dass eine Relativbewegung zwischen Steuerkolben 3 und Druckmeldekolben 9 ermöglicht ist, wobei eine Rückstelleinrichtung 17 den Steuerkolben 3 über die Mitnahmescheibe 13, an dem der Steuerkolben 3 mit seinem Außenumfang lose anliegt, gegen den Durchmessersprung 15 des Druckmeldekolbens 9 drückt, so dass die dahingehenden Kolben 3, 9 in jeder Verfahrstellung permanent miteinander in Anlage gehalten sind.

Ein weiterer Durchmessersprung 15' ist am Druckmeldekolben 9 innerhalb seines Bereiches in dem Steuerkolben 3 vorhanden. Der Außendurchmesser des Druckmeldekolbens 9 verringert sich dabei auf ein Kleinstmaß d, so dass er als Hohlnadel in Richtung des Fluideingangs 5 ragt. Der Druckmeldekolben 9 kann an seinem druckmeldekammerseitigen Ende von einem mit dem Anker 8 über ein Einstellgewinde 24 verbundenen Stößel 25 mit einer vorgebbaren Betätigungskraft in der Grundstellung beaufschlagt sein.

Durch die Anordnung des Druckmeldekolbens 9 mit dem Steuerkolben 3 ist eine Art Druckwaage gebildet. Auf der dem Fluideingang 5 zugewandten Seite des Steuerkolbens 3 herrscht vor der Messblende 14 ein entsprechend hoher Druck, der aufgrund der Messblende 14 zu einem demgegenüber niedrigeren Druckwert übergeht, der auf der Rückseite des Steuerkolbens 3 anliegt und aufgrund eines nicht näher dargestellten Eingriffsschlitzes (Öffnung 18) an der Mitnahmescheibe 13 auf deren dem Fluideingang 5 abgewandten Seite entsprechend ansteht. Ist der Proportional-Magnet entsprechend bestromt, so ist die als Druckfeder gebildete Rückstelleinrichtung 17 zumindest teilweise zusammengedrückt.

Der Druck in der Druckmeldekammer 12, der über die Druckmeldebohrung 11 und die Stichbohrungen 23 auch an den druckwirksamen Steuerflächen des Druckmeldekolbens 9 anliegt, unterstützt in dieser Ausführungsform des elektromagnetischen Stromregelventils 1 die Kraftwirkung des Proportional-Magneten mit einer Kraft F in derselben Richtung wie die Betätigungskraft des Proportional-Magneten wirkt. Durch diese Kraftentlastung kann ein konstruktiv kleiner aufbauender Proportional-Magnet zum Einsatz kommen als bei bekannten Lösungen, die auf den erfindungsgemäßen Druckmeldekolben 9 verzichten. Auch ist die dahingehende Entlastung energiesparend, da die Leistungsaufnahme für den Proportional-Magneten geringer ausfällt. Insoweit verringert also der größte Querschnitt des Druckmeldekolbens 9 die Projektionsfläche des Steuerkolbens 3 und die hieraus resultierende verbleibende Reststeuerfläche führt zu der den Proportional-Magneten entlastenden Krafteinleitung.

Die jeweilige Abströmöffnung 6, 6' bildet mit der jeweils zuordenbaren Durchtrittsöffnung 19, 19' die Regelblenden des Stromregelventils 1 aus. Aufgrund der spielbehafteten Stößelführung für den Stößel 25 im Polrohrsockel 22 und einer Durchgriffsbohrung im Magnetanker 8 steht der in der Druckmeldekammer 12 herrschende Druck auch in druckausgeglichener Weise am Anker 8 an. Dies gewährleistet einen hemmnisfreien Betrieb der Anker-Stößelanordnung. Der in dem Polrohr 20 geführte Anker 8 ist in üblicher Weise nach außen hin mit einer Abschlusskappe 26 versehen, die in der Art einer Bördelung mit dem Polrohr 20 des Stromregelventils 1 verbunden ist.

In der Fig. 2 ist eine weitere Ausführungsvariante des elektromagnetischen Wege-Proportional-Stromregelventils 1 gezeigt, wobei die wesentlichen Bauteile des Stromregelventils 1 und insbesondere die in seinem Ventilgehäuse 2 verbauten Komponenten im Wesentlichen gleich der Ausführungsform nach der Fig. 1 sind. Für die gleichen Bauteile gelten daher dieselben Bezugszeichen und die insoweit hierzu bereits getroffenen Ausführungen. Im Gegensatz zu dem in Fig. 1 gezeigten Ausführungsbeispiel wirkt der Anker 8 hier jedoch nicht drückend auf den Druckmeldekolben 9 ein, sondern wirkt im Sinne eines Freigebens eines vorgesehenen Verschiebeweges für den Steuerkolben 3 in ziehender Weise. In der in Fig. 2 gezeigten Ausführungsform des Stromregelventils 1 ist daher eine in Bezug auf die fluidführende Verbindung 4 teilweise geöffnete Schaltstellung des Steuerkolbens 3 gezeigt. Der nicht näher gezeigte Proportional-Magnet ist hierbei unbestromt.

Gemäß der Darstellung nach Fig. 2 ist der Druckmeldekolben 9 mit dem Steuerkolben 3 in Blickrichtung nach unten gedrückt, und zwar unter der Einwirkung einer Druckfeder 27, die in dem gezeigten Ausführungsbeispiel die Rückstelleinrichtung 17 bildet und auf den Magnetanker 8 eine Kraft ausübt. Die Rückstelleinrichtung 17 nach der Fig. 1 ist mit 17' bezeichnet ebenfalls vorhanden, wobei die Federkraft der Druckfeder 17' kleiner ist als die Federkraft der Druckfeder 27, so dass insoweit der Druckfeder 17' nur die Funktion zukommt, den Steuerkolben 3 spielfrei in seiner jeweiligen Regelstellung "einzuspannen". Der Anker liegt hierbei in der untersten Verfahrstellung an einem unteren Anschlag 28 an. Zur Einstellung der Betätigungskraft der Druckfeder 27 dient eine Einstellspindel 29, die über ein Einstellgewinde 24 drehbar in der Ventilanordnung geführt ist. Die Spindel 29 ist darüber hinaus an ihrem oberen freien Ende mit einer Art Entlüftungsschraube 30 verschlossen, die mit einem Schraubenteil 31 in ein zugeordnetes Innengewinde am freien Ende der Einstellspindel 29 eingreift. Mit der dahingehenden Anordnung lässt sich über das angesprochene Gewinde der sog. Totstrom einstellen. In der gezeigten Verfahrstellung des Steuerkolbens 3 ist die fluidführende Verbindung 4' gesperrt und die fluidführende Verbindung 4 teilweise geöffnet. Steigt der Fluiddruck in dem Fluideingang 5 an, so wird durch die druckwirksamen Flächen in Verbindung mit einer geregelten Bestromung des Proportional-Magneten der Anker 8 in Betrachtungsrichtung der Fig. 2 nach oben bewegt. Der Überschneidungsbereich der Durchtrittsöffnungen 19' mit der Abströmöffnung 6' vergrößert sich hierbei und der Überschneidungsbereich der Durchtrittsöffnung 19 mit der Abströmöffnung 6 verringert sich hierbei.

## Patentansprüche

1. Stromregelventil mit einem Ventilgehäuse (2), in dem ein Steuerkolben (3) axial verschiebbar geführt ist, der mindestens eine fluidführende Verbindung (4) zwischen einem Fluideingang (5) und einer Abströmöffnung (6) ansteuert, wobei ein von einem Proportional-Magneten betätigbarer Anker (8) auf den Steuerkolben (3) einwirkt, wobei für das Einwirken des Ankers (8) auf den Steuerkolben (3) ein Druckmeldekolben (9) dient, wobei mittels eines Druckmeldekanals (11) der Fluideingang (5) fluidführend mit einer Druckmeldekammer (12) derart verbunden ist, dass der in der Druckmeldekammer (12) anstehende Fluiddruck den Druckmeldekolben (9) sowie den Steuerkolben (3) im Sinne einer Entlastung des Proportional-Magneten mit einer Kraft (F) beaufschlagt, wobei eine weitere fluidführende Verbindung (4') zwischen dem Fluideingang (5) und einer weiteren Abströmöffnung (6') angesteuert ist, wobei der Steuerkolben (3) von dem Druckmeldekolben (9) zumindest teilweise durchgriffen ist, und wobei der Druckmeldekolben (9) im Bereich seiner freien Stirnseite mit einer Durchlassöffnung des Steuerkolbens (3) eine Messblende (14) begrenzt.

2. Stromregelventil nach Anspruch 1, **dadurch gekennzeichnet, dass** bei einer Vergrößerung des freien Durchflussquerschnittes der einen Abströmöffnung (6; 6') der freie Durchflussquerschnitt der jeweils anderen Abströmöffnung (6'; 6) mittels des Steuerkolbens (3) verkleinert ist.

3. Stromregelventil nach Anspruch 1 oder 2, **dadurch gekennzeichnet, dass** im Sinne einer Ausgestaltung als eine Art Prioritätsventil die eine Abströmöffnung (6) einen Fluidanschluss zur Versorgung eines anschließbaren Verbrauchers höherer Priorität mit dem Fluid bildet und dass demgegenüber die andere Abströmöffnung (6') einen weiteren Fluidanschluss zur Versorgung eines Verbrauchers mit niederer Priorität bildet.

4. Stromregelventil nach einem der vorhergehenden Ansprüche, **dadurch gekennzeichnet, dass** der Steuerkolben (3) mit mindesten zwei Reihen von axial voneinander beabstandeten Durchtrittsöffnungen (19, 19') versehen ist, wobei eine der Reihen der einen Abströmöffnung (6) und eine jeweils andere Reihe der anderen Abströmöffnung (6') zugeordnet ist.

5. Stromregelventil nach Anspruch 4, **dadurch gekennzeichnet, dass** die Durchtrittsöffnungen (19, 19') und die Abströmöffnungen (6, 6') aus mehreren einander zuordenbaren Bohrungsreihen gebildet sind, die zur Längs- oder Betätigungsachse des Ventils (1) axial beabstandet und in die Reihen aufgeteilt, diametral einander gegenüberliegend angeordnet sind.

6. Stromregelventil nach einem der vorhergehenden Ansprüche, **dadurch gekennzeichnet, dass** die vom Fluiddruck wirksam beaufschlagten Steuerflächen des Steuerkolbens (3) und die des Druckmeldekolbens (9) voneinander abgezogen eine vom Fluiddruck beaufschlagte Reststeuerfläche mit einer Krafteinleitung auf die beiden Kolben (3, 9) ergibt, die die Entlastung für den Proportional-Magneten bewirkt.

7. Stromregelventil nach einem der vorhergehenden Ansprüche, **dadurch gekennzeichnet, dass** der Druckmeldekanal (11) eine permanent fluidführende Verbindung zwischen dem Fluideingang (5) und der Druckmeldekammer (12) herstellt, dass hierfür der Druckmeldekanal (11) den Druckmeldekolben (9) axial durchgreift und/oder dass hierfür der Druckmeldekanal (11) seitlich in dem Ventilgehäuse (2) angeordnet an dem Steuerkolben (3) vorbeigeführt ist.

8. Stromregelventil nach einem der vorhergehenden Ansprüche, **dadurch gekennzeichnet, dass** die Messblende (14) durch Innenwandteile des Steuerkolbens (3) gebildet ist, die in jeder Verfahrstellung des Steuerkolbens (3) sich zwischen den Abströmöffnungen (6, 6') befinden und dass der Druckmeldekanal (11) des Druckmeldekolbens (9) unter Bildung eines radialen Abstandes die Messblende (14) durchgreift.

9. Stromregelventil nach einem der vorhergehenden Ansprüche, **dadurch gekennzeichnet, dass** das freie stirnseitige Ende des Druckmeldekanals (11) in jeder Verfahrstellung des Steuerkolbens (3) in die weitere fluidführende Verbindung (4') zwischen Fluideingang (5) und weiterer Abströmöffnung (6') ausmündet.

10. Stromregelventil nach einem der vorhergehenden Ansprüche, **dadurch gekennzeichnet, dass** der mittels des Proportional-Magneten axial verschiebbare Anker (8) über den Druckmeldekolben (9) als Zwischenglied permanent auf den Steuerkolben (3) einwirkt.

11. Stromregelventil nach einem der vorhergehenden Ansprüche, **dadurch gekennzeichnet, dass** der Druckmeldekolben (9) über eine Mitnahmescheibe (13) mit dem Steuerkolben (3) lose verbunden ist.

12. Stromregelventil nach einem der vorhergehenden Ansprüche, **dadurch gekennzeichnet, dass** der Proportional-Magnet in der Art eines drückenden Magneten ausgebildet ist und in seinem unbestromten Zustand der Steuerkolben (3) durch eine Rückstelleinrichtung (17) in eine Position gebracht ist, in der die fluidführende Verbindung (4) gesperrt und die weitere fluidführende Verbindung (4') zumindest teilweise geöffnet ist.

13. Stromregelventil nach einem der Ansprüche 1 bis 11, **dadurch gekennzeichnet, dass** der Proportional-Magnet in der Art eines ziehenden Magneten ausgebildet ist und in seinem unbestromten Zustand der Steuerkolben (3) durch eine Rückstelleinrichtung (17) in eine Position gebracht ist, in der die fluidführende Verbindung (4) zumindest teilweise geöffnet ist und die weitere fluidführende Verbindung (4') gesperrt ist.

## Claims

1. A flow control valve comprising a valve housing (2) in which a control piston (3) is guided with axial displacement, which control piston actuates at least one fluid-conducting connection (4) between a fluid inlet (5) and an outflow opening (6), an armature (8) that can be operated by a proportional solenoid acting on the control piston (3), a pressure detecting piston (9) serving for the action of the armature (8) on the control piston (3), the fluid inlet (5) being connected in a fluid-conducting manner to a pressure detecting chamber (12) by means of a pressure detecting duct (11) in such a way that the fluid pressure which prevails in the pressure detecting chamber (12) applies a force (F) to the pressure detecting piston (9) and the control piston (3) in the direction of relieving the proportional solenoid, an additional fluid-conducting connection (4') between the fluid inlet (5) and another outflow opening (6') being actuated, the control piston (3) being at least partially penetrated by the pressure detecting piston (9), and the pressure detecting piston (9) defining a metering orifice (14) in the region of its free front side with a passage opening of the control piston (3).

2. The flow control valve according to Claim 1, **characterised in that** when the free flow cross-section of the one outflow opening (6; 6') is enlarged, the free flow cross-section of the respective other outflow opening (6'; 6) is reduced by means of the control piston (3).

3. The flow control valve according to Claim 1 or 2, **characterised in that** in one configuration as a type of priority valve, the one outflow opening (6) forms a fluid port to supply a connectable consumer of higher priority with the fluid, and that in contrast the other outflow opening (6') forms an additional fluid port to supply a consumer of lower priority.

4. The flow control valve according to any of the preceding claims, **characterised in that** the control piston (3) is provided with at least two rows of passage openings (19, 19') that are spaced apart from one another axially, one of the rows being assigned to the one outflow opening (6), and a respective other row being assigned to the other outflow opening (6').

5. The flow control valve according to Claim 4, **characterised in that** the passage openings (19, 19') and the outflow openings (6, 6') are formed from a plurality of rows of bore holes assigned to each other and which, axially spaced apart relative to the longitudinal or actuating axis of the valve (1) and divided into the rows, are arranged lying diametrically opposite each other.

6. The flow control valve according to any of the preceding claims, **characterised in that** the control surfaces of the control piston (3) to which fluid pressure is effectively applied, and the control surfaces of the pressure detecting piston (9) produce, when pulled away from each other, a remaining control surface to which fluid pressure is applied with force introduced to the two pistons (3, 9) such that the proportional solenoid is relieved.

7. The flow control valve according to any of the preceding claims, **characterised in that** the pressure detecting duct (11) establishes a permanently fluid-conducting connection between the fluid inlet (5) and the pressure detecting chamber (12), that for this purpose the pressure detecting duct (11) penetrates the pressure detecting piston (9) in the axial direction, and/or for this purpose the pressure detecting duct (11), arranged laterally in the valve housing (2), is guided past the control piston (3).

8. The flow control valve according to any of the preceding claims, **characterised in that** the metering orifice (14) is formed by inner wall parts of the control piston (3), which inner wall parts are located between the outflow openings (6, 6') in any movement position of the control piston (3), and that the pressure detecting duct (11) of the pressure detecting piston (9) extends through the metering orifice (14) to form a radial distance.

9. The flow control valve according to any of the preceding claims, **characterised in that** the free front-side end of the pressure detecting duct (11) empties into the other fluid-conducting connection (4') between the fluid inlet (5) and the other outflow opening (6') in any movement position of the control piston (3).

10. The flow control valve according to any of the preceding claims, **characterised in that** the armature (8) that can be axially displaced by means of the proportional solenoid acts permanently on the control piston (3) by means of the pressure detecting piston (9) as an intermediate member.

11. The flow control valve according to any of the preceding claims, **characterised in that** the pressure detecting piston (9) is loosely connected to the control piston (3) by a drive plate (13).

12. The flow control valve according to any of the preceding claims, **characterised in that** the proportional solenoid is designed in the manner of a "pushing magnet", and in its non-energised state the control piston (3) is brought by a resetting device (17) into a position in which the fluid-conducting connection (4) is blocked and the other fluid-conducting connection (4') is at least partially opened.

13. The flow control valve according to any of Claims 1 to 11, **characterised in that** the proportional solenoid is designed in the manner of a pulling magnet, and in its non-energised state, the control piston (3) is brought by a resetting device (17) into a position in which the fluid-conducting connection (4) is at least partially open and the other fluid-conducting connection (4') is blocked.

## Revendications

1. Régulateur de débit ayant un corps (2) de régulateur, dans lequel un piston (3) de commande est guidé à coulissement axial et commande au moins une commande (4) fluidique entre une entrée (5) pour du fluide et une ouverture (6) d'évacuation, une armature (8), pouvant être actionnée par un aimant proportionnel, agissant sur le piston (3) de commande, dans lequel un piston (9) d'indication de la pression sert à faire agir l'armature (8) sur le piston (3) de commande, dans lequel, au moyen d'un conduit (11) d'indication de la pression, l'entrée (5) pour du fluide communique fluidiquement avec une chambre (12) d'indication de la pression, de manière à ce que la pression du fluide régnant dans la chambre (12) d'indication de la pression applique une force (F) au piston (9) d'indication de la pression, ainsi qu'au piston (3) de commande, en vue d'un soulagement de l'aimant proportionnel, dans lequel une autre communication (4') fluidique entre l'entrée (5) pour du fluide et une autre ouverture (6') d'évacuation est commandée, le piston (3) de commande étant traversé, au moins en partie, par le piston (9) d'indication de la pression et dans lequel le piston (9) d'indication de la pression délimite, dans la région de son côté frontal libre, par une ouverture de passage du piston (3) de commande, un diaphragme (14) de mesure.

2. Régulateur de débit suivant la revendication 1, **caractérisé en ce que**, pour un agrandissement de la section transversale libre de passage de l'une des ouvertures (6; 6') d'évacuation, la section transversale libre de passage de l'autre ouverture (6'; 6) d'évacuation est rendue plus petite au moyen du piston (3) de commande.

3. Régulateur de débit suivant la revendication 1 ou 2, **caractérisé en ce qu'**en vue d'une conformation en une sorte de régulateur de priorité, l'une des ouvertures (6) d'évacuation forme un raccord pour du fluide pour l'alimentation en fluide d'un consommateur raccordable de priorité plus grande et **en ce que**, en revanche, l'autre ouverture (6') d'évacuation forme un autre raccord pour du fluide pour l'alimentation d'un consommateur de priorité plus petite.

4. Régulateur de débit suivant l'une des revendications précédentes, **caractérisé en ce que** le piston (3) de commande est pourvu d'au moins deux rangées d'ouvertures (19, 19') de passage à distance les unes des autres axialement, l'une des rangées étant affectées à l'une des ouvertures (6) d'évacuation et une autre rangée à l'autre ouverture (6') d'évacuation.

5. Régulateur de débit suivant la revendication 4, **caractérisé en ce que** les ouvertures (19, 19') de passage et les ouvertures (6, 6') d'évacuation sont constituées de plusieurs rangées de trous pouvant être associés les uns aux autres, qui, en étant à distance axialement de l'axe longitudinal ou d'actionnement du régulateur (1) et subdivisés en les rangées, sont disposés de manière opposée les uns aux autres diamétralement.

6. Régulateur de débit suivant l'une des revendications précédentes, **caractérisé en ce que** les surfaces de commande du piston (3) de commande, soumises efficacement à la pression du fluide, et celle du piston (9) d'indication de la pression, déduites l'une de l'autre, donne une surface de commande restante, soumise à la pression du fluide, avec une application de force sur les deux pistons (3, 9), qui provoque le soulagement de l'aimant proportionnel.

7. Régulateur de débit suivant l'une des revendications précédentes, **caractérisé en ce que** le conduit (11) d'indication de la pression ménage une communication fluidique permanente entre l'entrée (5) pour du fluide et la chambre (12) d'indication de la pression, **en ce que**, pour cela, le conduit (11) d'indication de la pression traverse axialement le piston (9) d'indication de la pression et/ou **en ce que**, pour cela, le conduit (11) d'indication de la pression disposé latéralement dans le corps (1) du ventilateur passe devant le piston (3) de commande.

8. Régulateur de débit suivant l'une des revendications précédentes, **caractérisé en ce que** le diaphragme (14) de mesure est formé par des parties de paroi intérieure du piston (3) de commande, qui, dans chaque position de déplacement du piston (3) de commande, se trouve entre les ouvertures (6, 6') d'évacuation, et **en ce que** le conduit (11) d'indication de la pression du piston (9) d'indication de la pression traverse le diaphragme (14) de mesure avec formation d'une distance radiale.

9. Régulateur de débit suivant l'une des revendications précédentes, **caractérisé en ce que** l'extrémité libre du côté frontal du conduit (11) d'indication de la pression débouche dans chaque position de déplacement du piston (3) de commande dans l'autre communication (4') fluidique entre l'entrée (5) pour du fluide et l'autre ouverture (6') d'évacuation.

10. Régulateur de débit suivant l'une des revendications précédentes, **caractérisé en ce que** l'armature (8) pouvant coulisser axialement au moyen de l'aimant proportionnel agit sur le piston (3) de commande de manière permanente par l'intermédiaire du piston (9) d'indication de la pression comme élément intermédiaire.

11. Régulateur de débit suivant l'une des revendications précédentes, **caractérisé en ce que** le piston (9) d'indication de la pression est relié de manière lâche au piston (3) de commande par un disque (13) d'entraînement.

12. Régulateur de débit suivant l'une des revendications précédentes, **caractérisé en ce que** l'aimant proportionnel est constitué à la manière d'un aimant d'application d'une pression et, dans son état non alimenté par du courant électrique, le piston (3) de commande est mis, par un dispositif (17) de rappel, dans une position dans laquelle la communication (4) fluidique est obturée et l'autre communication (4') fluidique est ouverte, au moins en partie.

13. Régulateur de débit suivant l'une des revendications 1 à 11, **caractérisé en ce que** l'aimant proportionnel est constitué à la manière d'un aimant de traction et, dans son état non alimenté par du courant électrique, le piston (3) de commande est mis, par un dispositif (17) de rappel, dans une position dans laquelle la communication (4) fluidique est ouverte, au moins en partie, et l'autre communication (4') fluidique est obturée.
